# EUROPEAN PATENT APPLICATION

(11) **EP 1 443 706 A1**
(43) Date of publication of application: **04.08.2004**
(21) Application number: 03002024.2
(22) Date of filing: 28.01.2003
(51) Int. Cl.: H04L 12/28

(54) **Method and means for the detection of radar frequency band interferences in a network system having primary and secondary users**

(71) Applicant: Sony International (Europe) GmbH, 10785 Berlin (DE)
(72) Inventor: Guth, Heimo, Heinrich-Hertz-Str. 1, 70327 Stuttgart (DE); Stadelmeier, Lothar, Heinrich-Hertz-Str. 1, 70327 Stuttgart (DE)
(74) Representative: Müller - Hoffmann & Partner

(57) **Abstract**

Subject-matter of the invention is a method for the detection of radar signal interference with primary users of radar services within a defined radar signal frequency band that is also used by secondary users, in particular for RLANs in the 5 GHz frequency band. The invention further relates to an information distribution and allocation network system comprising at least one radio local area network (RLAN) as a secondary user. In order to provide for a reliable radar detection without any restrictions as to the data traffic and the available bandwidth, the invention proposes to use a separate radar signal detector for the detection of possible radar interferers. The invention is particularly useful for systems consisting of or comprising RLANs.

## Description

This invention, for which the background is defined in the preamble of claim 1, relates to a method for the detection of radar signal interferers with primary users of radar services within a defined radar signal frequency band that is also used by secondary users. The invention also relates, as specified in the preamble part of claim 6, to an information distribution and allocation network system comprising at least one radio local area network (RLAN) as a secondary user within a defined radar frequency band having at least one wireless terminal (WT) and at least one access point (AP) and being provided with means for the detection of radar interferers.

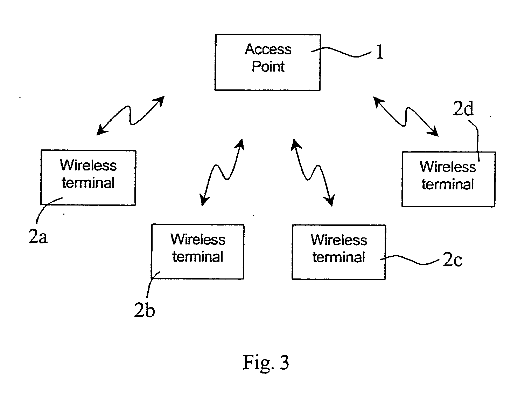

RLANs are secondary users in specific frequency bands, in particular in the 5 GHz frequency band. Therefore they have to prevent interference with primary users, namely radar services. Fig. 3 shows the principle structure of a typical 5 GHz RLAN. Dynamic frequency selection (DFS) algorithms that are used so far are based on the assignment of measurement periods during transmission pauses. The detection mechanisms, i. e. the assignment of measurement periods by the network controller, e. g. the access point (AP) 1 or the Central controller (CC) in HiperLAN/2, operate such that the controller asks wireless terminals (WTs) 2a, 2b, ..., to measure within a dedicated time frame, i. e. multiple of one MAC frame, for interferers. This assignment of measurement periods during transmission pauses causes an additional complexity of the protocol and additional message exchange overhead in the wireless network. Accordingly, reliable radar detection is so far not possible without significant restrictions regarding the data traffic and the available bandwidth.

Some principal drawbacks or disadvantages of the presently proposed or known RLAN systems are the following:

In Europe, the 5 GHz band is open for the so-called primary users, e. g., mobile satellite services and for secondary users, like RLANs. At present, the regulatory requirements for secondary users are:
- A test is required for the presence of primary users. If a primary user is found, another channel must be used.
- About 20 % of the time must be spent for radar detection.
- Use of an occupied channel is prohibited until a preceding new radar signal search has been successful in determining that said channel is free.
- If change to a non-occupied channel is necessary, a radar signal search has to be done first.
- Even if no primary user is present, RLANs should distribute themselves equally across the frequency band.

It is further to be noted that the detection mechanisms that are used so far are based on the assignment of measurement periods by the network controller, e. g. the AP or the CC in HiperLAN/2. The controller has to ask the WTs to measure within a dedicated time frame, i. e. multiple of one MAC frame, for interferers. This means additional complexity of the protocol and additional message change overhead in the wireless network. Basically, two measurements are possible:
(a) The CC stops all traffic during the measurement period. Although the detection probability of the radar is good, this solution has the serious disadvantage of interruption of all data traffic. This' might be acceptable for data transmissions, but is not for services that require a constant bandwidth like video streams, i. e. the quality of service is add odds.
(b) The WT measures only when no traffic is on air (percentile measurement). In other words, the WT is asked to detect radars only in parts of the MAC frame without traffic. Radar pulses that might occur during traffic phases are not recognized if the power level of the RLAN connection is too high. The obvious disadvantages are that the network cannot look every time for radar signals and only parts of the MAC frame can be used for radar detection and the time issues are that measurements on the RF channel are always performed over a time frame of at least one MAC frame.

Looking more closely to the presently proposed DSF measurement standards, the published draft for IEEE 802.11a specifies no algorithm for the frequency change and IEEE 802.11h only specifies the spectrum management. Accordingly, the current HiperLAN/2 standard specifies messages related to a DFS algorithm which only allows detection of the received signal strength; it does not specify any messages or algorithms for detecting radar. Rather, in the original sense dynamic frequency selection systems were intended to detect interference from other RLANs. The proposed standard allows a change of the operating frequency initiated by the controller. However, the DFS algorithm is not specified for the HiperLAN/2 standard. Rather, it is intended to be used to distribute the operating frequency of the wireless HiperLAN/2 networks equally across the available frequency band.

It is an object of the invention to improve the detection of possible radar interferers in particular in networks consisting of or comprising (an) RLAN(s) as (a) secondary user(s).

According to the proposal of the invention, the problem outlined above is solved by a method for the detection of radar signal interference with primary users of radar services within a defined radar signal frequency band that is also used by secondary users in that the function of radar interference detection is separated from but allocated to the secondary user system. Preferably, by use of the invention the frequency spectrum assigned to said user(s) is continuously scanned for radar signals.

In the case where said secondary user is at least one radio local area network (RLAN) for which the responsibility for radar interference detection in accordance with the invention is assigned to an independent radar detection means, preferably said means informs the associated RLAN(s) about available frequency channel(s). The independent radar detection means is preferably connected to an (the) access point(s) (AP) of the RLAN(s) to enable said RLAN(s) to react to a detected interferer and to change frequency to (an) available channel(s).

Further, and in accordance with the invention, an information distribution and allocation network system comprising at least one RLAN as a secondary user within a defined radar frequency band and being provided with at least one wireless terminal and at least one access point and also being provided with means for the detection of radar interferers, is characterized in that a separate and autonomous radar signal detector is provided for monitoring the presence of interferers and for providing an interference signal in relation to said defined radar frequency band to a network controller which preferably is associated to said access point of said RLAN(s).

A specific advantage of the network system according to the invention is that the autonomous radar detector is designed such as to provide a continuous radar signal monitoring. The radar detector can be connected in a wired connection or in a wireless connection with said RLAN access point.

The idea of the invention to transfer the responsibility for radar detection to an independent radar detector that might be part of a 5 GHz RLAN or might be part of a more complex network provides for a considerable variety of advantages over the prior art discussed above. Those are amongst others the following
- The radar detector will look/search for a radar signal permanently, i. e. all the time. If a radar signal is detected, the information will be sent to the one or respectively several access point(s) of the various RLANs in the network.
- The independent radar detector will keep the information about detected radar signal available for new RLANs, which will be connected in the future.
- Information about occupied channels is known at any time.
- The RLAN can switch to another channel immediately because "empty" channels are known.
- The RLAN can use the full bandwidth for data transmission.
- The software of the wireless terminals becomes less complex.
- An initial search for a new installed LAN to the network can be dispensed with.
- Since the RLANs should distribute themselves equally across the frequency band, this can be used also to coordinate the frequency band within the different RLANs, i. e. the supplied information of the used channels can be provided to other LANs.

The invention and the above and other specific advantages thereof will be elucidated in the following with reference to the accompanying drawings of which
- Fig. 1: shows the basic structure of a RLAN comprising an associated but separate radar detector in accordance with the invention;
- Fig. 2: shows the structure of an InHouse network comprising various RLANs and a separate radar detector;
- Fig. 3: already mentioned above depicts the structure of a typical 5 GHz RLAN according to the prior art;
- Fig. 4: is a flow chart of the functioning mechanism of the radar detector in accordance with the invention;
- Fig. 5: elucidates a boot phase of an RLAN access point receiving channel information from the independent and separated radar detector; and
- Fig. 6: is a flow chart how the information that a radar signal is detected is processed at the access point of an RLAN.

Generally, the basic idea of the invention is to separate the complete radar detection function from an information network, in particular from the RLAN. The detection of the radar signals will be done outside of the network. Due to this separation of that function, the frequency spectrum can be scanned for radar signals all the time, i. e. Time Outs due to radar scans will be eliminated for the network, i. e. the RLAN.

Those skilled in the art will have recognized that the invention inverts the message flow related to radar detection. In the mechanisms that are used so far, the lower layers, i. e. phy MAC, are responsible for radar detection and report the occurence of radar signal to the upper layers, i. e. DLC. CL. On the other hand, with the approach according to the invention, a dedicated radar detection device informs all RLAN devices from top of the protocol stack, i. e. an application, e. g. running on the wired media, is used to inform all other RLAN devices about radar detection. In addition to the above, the advantage is obvious: No waste of bandwidth resources to guarantee safe radar detection.

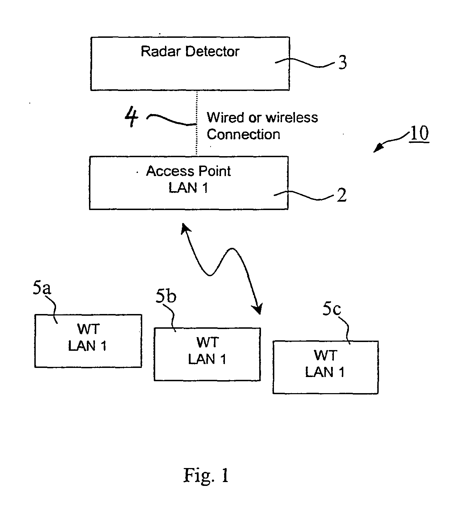

Fig. 1 shows a first possiblity according to the invention, i. e. to use a separate radar detector 3 within a single RLAN 10. This separate radar detector 3 is connected to a LAN access point 2 via a wired or wireless connection 4 to enable the RLAN to react, i. e. to detected interferers and to initiate the necessary steps for the various wireless terminals 5a, 5b, 5c, e. g. to change the frequency.

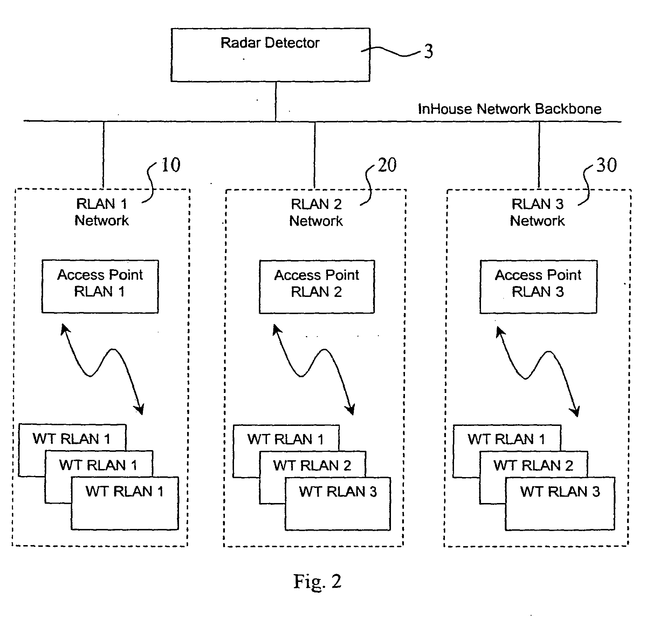

Fig. 2 shows the possibility to use a separate radar detection within an existing network, e. g. an ethernet. The separate radar detector 3 will be connected to the access point(s) via this network to enable the RLAN or, as the case may be, a plurality of RLANs 10, 20, 30 to react to a detected interferer and to initiate the necessary steps, e. g. change of frequency.

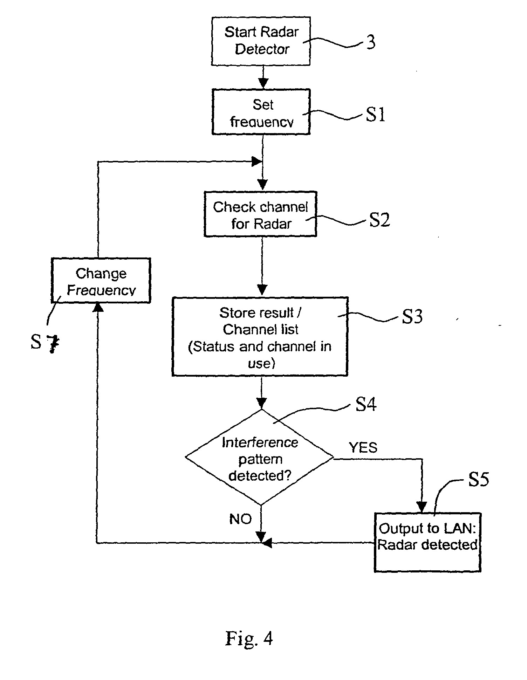

Fig. 4 shows the flow chart of the mechanism of the radar detector. The radar detector 3 is always looking for radar signals; it sets the frequency in step S1 and checks this channel for radar signal in step S2. In step S3, the check result is stored in a channel list comprising information about status and channels in use. Then in step S4 any possible interference pattern is detected. If the channel is available it is respectively assigned to the LAN(s) in step S5.

If the answer is YES, this information is output to the LAN(s) and a change of frequency is initiated in step S7. If the answer is NO, it is required to change to the next channel for radar signal search. The radar detector 3 is searching the complete frequency band and contains the list of "free" and "occupied" channels. This may be further explained with reference to an example: If the frequency range to be searched is, e. g., divided in 20 channels, the detector 3 searches in one channel after another for a radar signal. If at least one radar signal is detected in one channel, the detector 3 informs the LAN(s). If no radar signal is detected, the channel is signaled as "clean". Then the next channel is checked. After reaching the last channel, channel 20 in this example, the detector 3 starts the searching process again with the first channel.

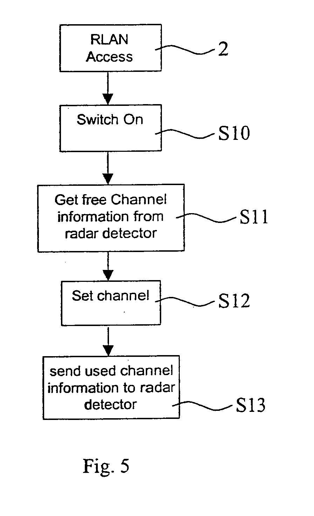

The flow chart of Fig. 5 shows the mechanism how an access point should react within its boot phase. Since radar detection is "outside", the AP 2 gets the information of a free channel from the separate radar detector. The advantage is a reduced time out which is necessary for a radar search. After switch on in step S10 "free channel" information is transferred from radar detector in step S11 and an allocated channel is set in step S12 followed by a return information to the radar detector in step S13 about the used channel

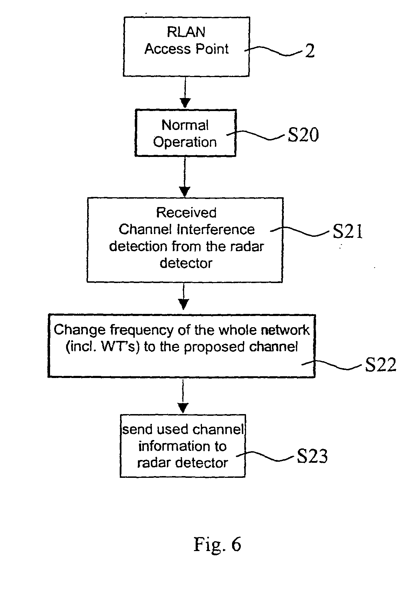

Fig. 6 elucidates the mechanism how an RLAN access point 2 typically reacts under normal condition if separate radar detector signals that a radar signal is detected at used frequency. First, in step S20 a normal operation is signalled. Then, as the case may be, in step S21 a channel interference is detected and transferred from radar detector 3. This initiates in step S22 a change of frequency of the whole network including the wireless terminals to a newly proposed channel. Subsequently, the "used channel" information is sent back to the radar detector in step S23.

## Claims

1. A method for the detection of radar signal interference with primary users of radar services within a defined radar signal frequency band that is also used by secondary users, wherein the function of radar interference detection is separated from but allocated to the secondary user.

2. The method of claim 1, wherein the frequency spectrum assigned to said secondary user is continuously scanned for radar signals.

3. The method of claims 2, wherein said secondary user is at least one radio local area network (RLAN) for which the responsibility for radar interference detection is assigned to an independent radar detection means.

4. The method of claim 3, wherein the independent radar detection means informs the associated RLAN(s) about available frequency channel(s).

5. The method of claim 4, wherein the independent radar detection means is connected to an access point of the RLAN(s) to enable the RLAN(s) to react to a detected interferer and to change frequency to (an) available channel(s).

6. An information distribution and allocation network system comprising at least one radio local area network (RLAN) as a secondary user within a defined radio frequency band having at least one wireless terminal (WT) and at least one access point (AP) and being provided with means for the detection of radar interferers **characterized in that** a separate and autonomous radar signal detector (3) is provided for monitoring the presence of interferers and for providing an interference signal relative to said defined radar frequency band to a network controller.

7. The network system of claim 6, wherein said network controller is associated to the access point(s) of said RLAN(s).

8. The system of claim 6, wherein said autonomous radar detector is provided with means for a continuous radar signal monitoring.

9. The system of claim 7, wherein said radar detector is in wired connection with said LAN access point.

10. The system of claim 7, wherein said radar detector is wireless connected with said LAN access point.
